# EUROPEAN PATENT SPECIFICATION

(11) **EP 4 556 501 B1**
(45) Date of publication and mention of the grant of the patent: **14.10.2026**
(21) Application number: 23860895.4
(22) Date of filing: 30.08.2023
(51) Int. Cl.: C08F 293/00, C08F 220/30, C01B 32/168, C01B 32/194, C01B 32/198, H01M 4/36, H01M 4/58, H01M 4/583, H01M 4/62, H01M 4/136

(54) **BLOCK COPOLYMER, CROSSLINKED BLOCK COPOLYMER COMPRISING BLOCK COPOLYMER, SULFUR-CARBON COMPOSITE, METHOD OF MANUFACTURING THE SULFUR-CARBON COMPOSITE**
BLOCKCOPOLYMER, VERNETZTES BLOCKCOPOLYMER MIT BLOCKCOPOLYMER, SCHWEFEL-KOHLENSTOFF-VERBUNDSTOFF, VERFAHREN ZUR HERSTELLUNG EINES SCHWEFEL-KOHLENSTOFF-VERBUNDSTOFFS
COPOLYMÈRE SÉQUENCÉ, COPOLYMÈRE SÉQUENCÉ RÉTICULÉ COMPRENANT UN COPOLYMÈRE SÉQUENCÉ, COMPOSITE SOUFRE-CARBONE, PROCÉDÉ DE PRÉPARATION D'UN COMPOSITE SOUFRE-CARBONE

(30) Priority: 31.08.2022 KR 20220110368
(43) Date of publication of application: 21.05.2025
(73) Proprietor: LG Energy Solution, Ltd., Seoul 07335 (KR); Seoul National University R&DB Foundation, Seoul 08826 (KR)
(72) Inventor: KIM, Soo-Hyun, Daejeon 34122 (KR); LEE, Jong-Chan, Seoul 08830 (KR); KIM, Ki-Hyun, Daejeon 34122 (KR); SOHN, Kwon-Nam, Daejeon 34122 (KR); KOONG, Chan-Yeong, Seoul 08789 (KR); JEONG, Da-Un, Seoul 01417 (KR); HONG, Dong-Gi, Seoul 08792 (KR)
(74) Representative: Goddar, Heinz J.
(86) International application number: PCT/KR2023/012932
(87) International publication number: WO 2024/049219

(56) References cited:
- CN-A- 114 122 399
- KR-A- 20200 096 964
- CELLINI FILIPPO; BLOCK LEANNE; LI JIE; KHAPLI SACHIN; PETERSON SEAN D.; PORFIRI MAURIZIO: "Mechanochromic response of pyrene functionalized nanocomposite hydrogels", SENSORS AND ACTUATORS B: CHEMICAL, ELSEVIER BV, NL, vol. 234, 9 May 2016 (2016-05-09), NL , pages 510 - 520, XP029623234, ISSN: 0925-4005, DOI: 10.1016/j.snb.2016.04.149
- HERGUÉ NOÉMIE, ERNOULD BRUNO, MINOIA ANDREA, LAZZARONI ROBERTO, GOHY JEAN‐FRANÇOIS, DUBOIS PHILIPPE, COULEMBIER OLIVIER: "Improving the Performance of Batteries by Using Multi‐Pyrene PTMA Structures", BATTERIES & SUPERCAPS, vol. 1, no. 3, 1 September 2018 (2018-09-01), pages 102 - 109, XP093145753, ISSN: 2566-6223, DOI: 10.1002/batt.201800022
- BAGHERI ALI, BOYER CYRILLE, LIM MAY: "Synthesis of Light-Responsive Pyrene-Based Polymer Nanoparticles via Polymerization-Induced Self-Assembly", MACROMOLECULAR RAPID COMMUNICATIONS, WILEY-VCH, DE, vol. 40, no. 2, 1 January 2019 (2019-01-01), DE , pages 1800510, XP093024723, ISSN: 1022-1336, DOI: 10.1002/marc.201800510
- JEONG DAUN, HONG DONG GI, YOOK JINSOL, KOONG CHAN YEONG, KIM SOOHYUN, KIM KI-HYUN, SOHN KWONNAM, LEE JONG-CHAN: "Cationic polymer-grafted graphene oxide/CNT cathode-coating material for lithium–sulfur batteries", RSC ADVANCES, ROYAL SOCIETY OF CHEMISTRY, GB, vol. 11, no. 41, 21 July 2021 (2021-07-21), GB , pages 25305 - 25313, XP093145757, ISSN: 2046-2069, DOI: 10.1039/D1RA03744G

## Description

### TECHNICAL FIELD

The present disclosure relates to a block copolymer capable of capturing polysulfide leaking out from a positive electrode to improve battery life and a secondary battery comprising the same.

### BACKGROUND ART

With the technology development and growing demand for mobile devices, there is a growing demand for secondary batteries as an energy source, and among secondary batteries, lithium secondary batteries are brought to market and being widely used due to high energy density and working potential, long cycle life and low self-discharge rate.

Recently, with the rising interest in environmental issues, many studies are being conducted on electric vehicles (EV) and hybrid electric vehicles (HEV) as an alternative to vehicles using fossil fuels such as gasoline vehicles and diesel vehicles that are regarded as one of the main causes of air pollution. Lithium secondary batteries having high energy density, high discharge voltage and output stability are mainly studied and used as a power source of electric vehicles and hybrid electric vehicles.

Lithium secondary batteries have a structure in which an electrode assembly includes a positive electrode and a negative electrode, each electrode including an electrode current collector and an active material coated on the electrode current collector, with a porous separator interposed between the positive electrode and the negative electrode, and a nonaqueous electrolyte comprising a lithium salt is wetted to the electrode assembly.

At the present time, the lithium secondary battery market is governed by technology based on pairing of lithium cobalt oxide LiCoO2 at the positive electrode and graphite at the negative electrode. The rated voltage of lithium secondary batteries is about 3.6V, while the rated voltage of most of other types of batteries (Ni-Cd, Ni-MH, etc.) is 1.5V. The energy density per volume and the energy density per mass are about 300 to 500 Wh/l and 160 to 200 Wh/kg, respectively. This value is the highest value among all the batteries now in the market. Additionally, this type of batteries has low self-discharge and long life (500 or 1000 cycles). Despite the surprising performance achievement, there is not much difference in performance between all the current lithium ion batteries, and it is foreseen that improvement will take place only to a very limited extent.

Accordingly, lithium-sulfur (Li-S) batteries are emerging as an alternative to the known lithium ion batteries.

In the same way as lithium ion secondary batteries, lithium-sulfur batteries work by lithium ions moving in the electrolyte between the positive electrode and the negative electrode. However, since lithium-sulfur batteries simply use sulfur, as opposed to lithium ion secondary batteries designed to store energy by intercalation reaction of lithium ions into molecules of the electrode active material, inducing changes in electrode structure, lithium-sulfur batteries work based on oxidation and reduction reaction between sulfur and lithium ions. Accordingly, compared to lithium ion secondary batteries, lithium-sulfur batteries may have theoretically higher capacity at the equal volume without limitations on the electrode structure. Due to this feature, in lithium-sulfur batteries comprising the sulfur positive electrode and the lithium metal negative electrode, when it is assumed that elemental sulfur (S₈) having ring structure is completely reduced to lithium sulfide (Li₂S), the theoretical capacity is 1,675 mAh/g and the theoretical energy density is 2,600 Wh/kg that are higher 3 times to 6 times than the existing other battery systems (Ni/MH batteries: 450 Wh/kg, Li/FeS: 480 Wh/kg, Li/MnO₂: 1,000 Wh/kg, Na/S: 800 Wh/kg).

On the other hand, the existing transition metal oxide based lithium ion secondary batteries may be thought to be batteries comprising materials that are the sources of heavy metal contamination since they comprise oxides of nickel (Ni), cobalt (Co) and manganese (Mn) having higher density than the density of heavy metal (5 g/mL or more of metal) in the positive electrode. However, lithium-sulfur batteries are free of materials causing contamination and comprise nontoxic materials, and from this perspective, they are considered to be eco-friendly. Additionally, the positive electrode material, sulfur, is abundant on Earth and inexpensive.

Meanwhile, in lithium-sulfur batteries, reduction reaction of sulfur and oxidation reaction of lithium metal occurs during discharging, and in this instance, sulfur forms lithium polysulfide (LiPS) of linear structure from S₈ of ring structure, and lithium-sulfur batteries show stepwise discharge voltage until the lithium polysulfide is completely reduced to Li₂S. However, while lithium-sulfur batteries are charged/discharged, charge/discharge efficiency reduces and battery life degrades. As described above, life degradation of lithium-sulfur batteries is caused by many different factors such as side reaction of electrolyte solutions, instability of lithium metal, and accumulation of positive electrode by-products (for example, dissolution of lithium polysulfide from the positive electrode).

That is to say, in lithium-sulfur batteries using the sulfur based compound for the positive electrode active material and alkaline metal such as lithium for the negative electrode active material, dissolution of lithium polysulfide occurs during charging/discharging, and the lithium polysulfide leaking from the positive electrode migrates to the negative electrode, which reduces the capacity of the lithium-sulfur batteries and shortens the life of the lithium-sulfur batteries. That is to say, since the lithium polysulfide leaking from the positive electrode has high solubility in the electrolyte solution, the lithium polysulfide may unintentionally migrate to the negative electrode through the separator via the electrolyte solution, causing irreversible loss of the positive electrode active material and the consequential capacity fading, and sulfur particle accumulation on lithium metal surface induced by side reaction, resulting in shorter battery life.

To solve the life reduction problem caused by lithium polysulfide, in the technical field, studies have been conducted on the addition of reaction mitigating materials to the negative electrode to prevent side reaction on lithium metal surface, but did not produce meaningful outcomes.

Sensors and Actuators B: Chemical, vol. 234, pages 510-520, discloses the free radical polymerization of poly(N-isopropylacrylamide) and pyrene terminated poly(ethylene)glycol methacrylate copolymers in the presence of nanoclay, acting as a physical crosslinker.

Batteries & Supercaps, vol. 1, no. 3, pages 102-109, discloses a pyrene-based PTNA copolymer, which is combined with carbon nanotubes to improve the performance of lithium batteries.

CN 114122399 A discloses a block copolymer, comprising: a first block comprising a first repeating unit having a pyrene group at a terminal; and a second block comprising a second repeating unit having a cationic functional group.

### SUMMARY

### Technical Problem

An embodiment of the present disclosure is directed to providing a block copolymer capable of capturing lithium polysulfide leaking from a positive electrode to improve the life of a lithium-sulfur battery.

Another embodiment of the present disclosure is directed to providing a crosslinked block copolymer manufactured by polymerization of the block copolymer.

Another embodiment of the present disclosure is directed to providing a sulfur-carbon composite capable of capturing lithium polysulfide leaking from the positive electrode to improve the life of a lithium-sulfur battery.

Another embodiment of the present disclosure is directed to providing a method of manufacturing the sulfur-carbon composite.

### Technical Solution

To solve the above-described problem of the present disclosure, there are provided a block copolymer, a crosslinked block copolymer comprising the block copolymer, a sulfur-carbon composite and a method of manufacturing a sulfur-carbon composite according to the following embodiments.

According to a first embodiment, there is provided the block copolymer, comprising a first block comprising a first repeating unit having a pyrene group at a terminal; and a second block comprising a second repeating unit having a cationic functional group, wherein the first repeating unit is represented by the following Formula 3, and wherein the second repeating unit is represented by the following Formula 4: 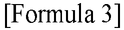 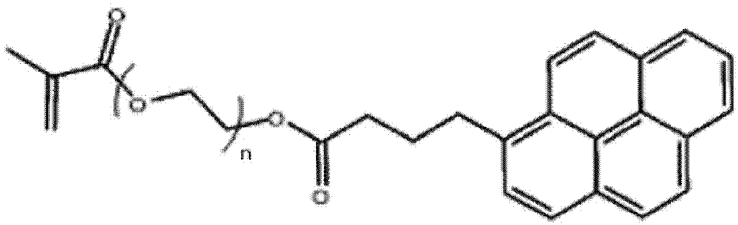 wherein in the Formula 3, n is 1 to 1,000,000, 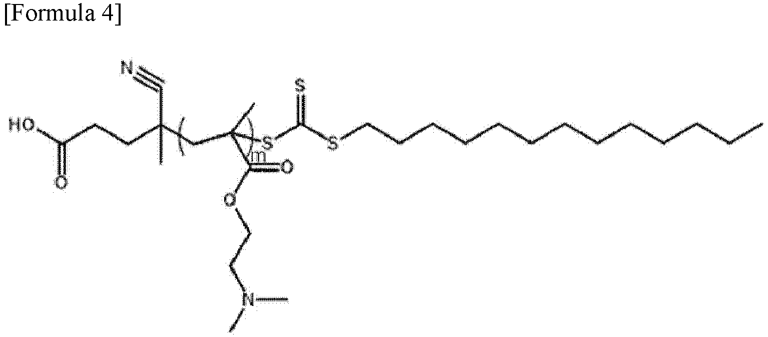 wherein in the Formula 4, m is 1 to 1,000,000.

According to a second embodiment, in the first embodiment, a mole ratio of the first block and the second block may be 1:99 to 99: 1.

According to a third embodiment, in the first or second embodiment, the first repeating unit may be a result of reaction between a carboxylic acid compound having the pyrene group at the terminal and an alcohol compound having a (meth)acrylate group.

According to a fourth embodiment, there is provided a crosslinked block copolymer, comprising a first block copolymer and a second block copolymer having a same structure as the first block copolymer and crosslinked with the first block copolymer, wherein the first block copolymer is a block copolymer, comprising: a first block comprising a first repeating unit having a pyrene group at a terminal; and a second block comprising a second repeating unit having a cationic functional group, wherein the cationic functional group included in the first block copolymer and the cationic functional group included in the second block copolymer are crosslinked to each other by a crosslinking agent.

According to a fifth embodiment, there is provided a sulfur-carbon composite, comprising a porous carbon material; a coating layer on at least one surface of the porous carbon material, the coating layer comprising the crosslinked block copolymer according to fourth embodiment; and a sulfur compound present in at least a portion of a surface of the porous carbon material or inside of pores of the porous carbon material, or a surface of the coating layer.

According to a sixth embodiment, in the fifth embodiment, a weight ratio of the porous carbon material and the crosslinked block copolymer may be 95:5 to 85:15.

According to an seventh embodiment, in the fifth or sixth, a weight ratio of the porous carbon material coated with the crosslinked block copolymer and the sulfur compound may be 3:7 to 4:6.

According to a eigth embodiment, there is provided a lithium-sulfur battery, comprising a positive electrode, a negative electrode, and a separator interposed between the positive electrode and the negative electrode, wherein the positive electrode comprises the sulfur-carbon composite according to any one of the fifth to seventh embodiments.

According to a ninth embodiment, there is provided a method of manufacturing the sulfur-carbon composite, comprising steps of: introducing a block copolymer, comprising: a first block comprising a first repeating unit having a pyrene group at a terminal; and a second block comprising a second repeating unit having a cationic functional group into a dispersion of porous carbon material to coat the block copolymer on at least one surface of the porous carbon material; crosslinking the block copolymer coated on the porous carbon material to form a crosslinked block copolymer; and loading a sulfur compound into the porous carbon material coated with the crosslinked block copolymer.

According to a tenth embodiment, in the ninth embodiment, the crosslinked block copolymer may be formed by adding a crosslinking agent to the porous carbon material coated with the block copolymer, and performing thermal treatment.

According to a eleventh embodiment, in the tenth embodiment, the crosslinking agent may comprise a dihalogenoalkane compound.

### Advantageous Effects

The sulfur-carbon composite of the present disclosure comprises the crosslinked block copolymer, and the crosslinked block copolymer is manufactured from the block copolymer comprising the first block comprising the first repeating unit having the pyrene group at the terminal and the second block comprising the second repeating unit having the cationic functional group.

As the crosslinked block copolymer is coated on the sulfur-carbon composite, it may be possible to prevent migration of lithium polysulfide leaking from the positive electrode of the lithium-sulfur battery to the negative electrode. Accordingly, it may be possible to prevent sulfur particle accumulation on the lithium metal surface of the negative electrode, thereby maintaining the charge/discharge capacity of the lithium-sulfur battery, and improving the battery life.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIGS. 1 to 6 show the synthesis mechanism and the synthesized structure of a monomer and a block copolymer prepared in example 1.
FIGS. 7 to 10 are graphs showing discharge capacity of batteries evaluated by charging/discharging at 25°C.

### DETAILED DESCRIPTION

Hereinafter, the present disclosure will be described in more detail.

It should be understood that the terms or words used in the specification and the appended claims should not be construed as limited to general and dictionary meanings, but rather interpreted based on the meanings and concepts corresponding to technical aspects of the present disclosure on the basis of the principle that the inventor is allowed to define terms appropriately for the best explanation.

The term "comprise(s)" or "include(s)" when used in this specification, specifies the presence of stated elements, but does not preclude the presence or addition of one or more other elements, unless the context clearly indicates otherwise.

The term "about" or "approximately" is used herein in the sense of at, or nearly at, when given the manufacturing and material tolerances inherent in the stated circumstances and is used to prevent the unscrupulous infringer from unfairly taking advantage of the present disclosure where exact or absolute figures are stated to help better understanding of the present disclosure.

The present disclosure relates to a block copolymer, a crosslinked block copolymer comprising the block copolymer, a sulfur-carbon composite, a method of manufacturing the sulfur-carbon composite, and an electrochemical cell comprising the same. In the present disclosure, the electrochemical cell may include any type of battery that generates electrochemical reaction. Specific examples of the electrochemical cell include any type of primary batteries, secondary batteries, fuel cells, solar cells and capacitors such as super capacitors, or the like. In particular, the electrochemical cell may be a secondary battery, and the secondary battery may be a lithium ion secondary battery. The lithium ion secondary battery may include, for example, a lithium-metal battery, a lithium-sulfur battery, an all-solid-state battery, a lithium polymer battery and so on, and among them, a lithium-sulfur battery is preferred.

Among secondary batteries, lithium-sulfur batteries have high discharge capacity and theoretical energy density, and since sulfur used as a positive electrode active material is abundant on Earth and inexpensive, lithium-sulfur batteries require low battery manufacturing costs and are eco-friendly, so they are gaining attention as the next-generation secondary battery.

In the present disclosure, the positive electrode active material comprises a carbon-sulfur composite, and the carbon-sulfur composite comprises a porous carbon material. **In** the lithium-sulfur battery, since the positive electrode active material, sulfur, is nonconductive, the carbon-sulfur composite, in which a conductive material, for example, a carbon material is combined with sulfur, is commonly used to improve electrical conductivity.

According to an aspect of the present disclosure, there is provided a block copolymer, comprising:
a first block comprising a first repeating unit having a pyrene group at a terminal; and
a second block comprising a second repeating unit having a cationic functional group,
wherein the first repeating unit is represented by the following Formula 3, and
wherein the second repeating unit is represented by the following Formula 4: 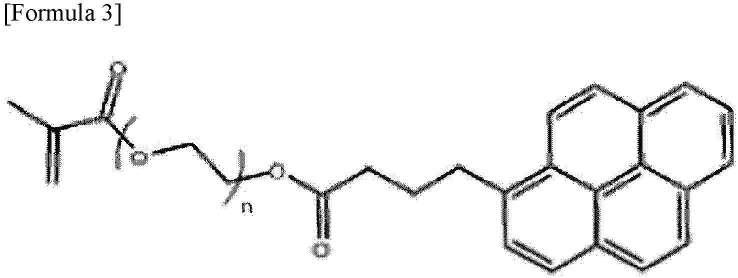
wherein in the Formula 3, n is 1 to 1,000,000, 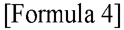 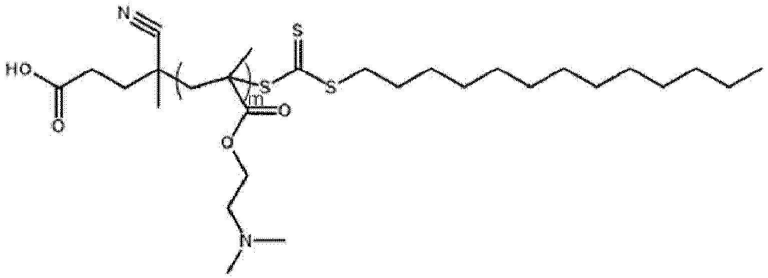
wherein in the Formula 4, m is 1 to 1,000,000.

According to an embodiment of the present disclosure, a mole ratio of the first block and the second block may be appropriately selected as required. For example, the mole ratio may be 1:99 to 99:1. Additionally, the weight average molecular weight of the block copolymer may be appropriately selected as required. For example, the weight average molecular weight of the block copolymer may be 10 to 5,000,000.

According to an embodiment of the present disclosure, the first block may originate from the first repeating unit. Additionally, the second block may originate from the second repeating unit.

For example, the first block may be made via chain transfer polymerization of the first repeating unit, and the second block may be made via chain transfer polymerization of the second repeating unit. In this case, the degree of polymerization of each of the first block and the second block may be 10 to 1,000,000.

According to an embodiment of the present disclosure, the first repeating unit may be the result of reaction between a carboxylic acid compound having the pyrene group at the terminal and an alcohol compound having a (meth)acrylate group.

According to an embodiment of the present disclosure, the block copolymer may be formed by polymerization of the first block and the second block via chain transfer polymerization. For example, after dissolving the first block, the second block, a chain transfer agent (CTA) and a thermal initiator (for example, azobisisobutyronitrile (AIBN)) in a dioxane solvent and removing oxygen in the solution, the polymerization may be performed at high temperature (for example, 80°C). For example, the chain transfer agent may be 4-cyano-4-(((tridecylthio)carbonothioyl)thio)pentanoic acid. Subsequently, precipitation in diethyl ether and purification may be performed to prepare the block copolymer.

According to an embodiment of the present disclosure, the block copolymer comprising the first block and the second block may be represented by the following Formula 7.

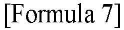

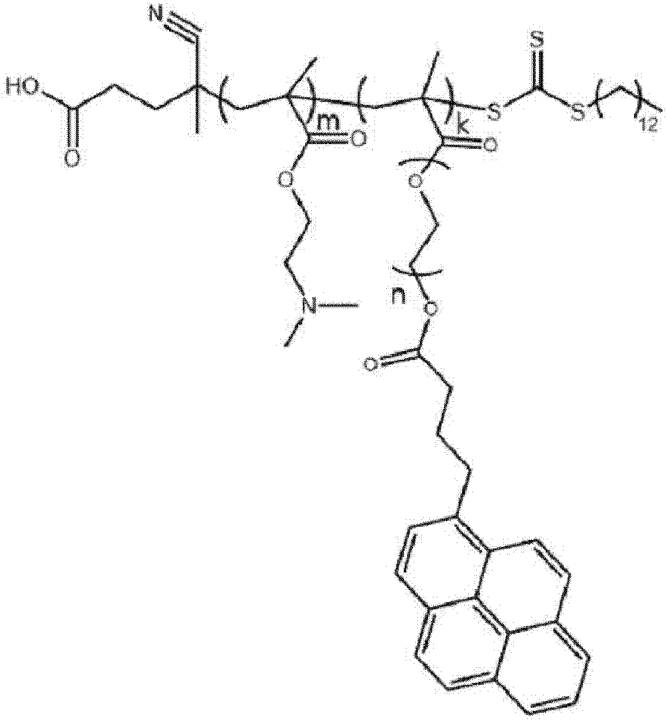

In the above Formula 7, each of m, n and k may be 0 to 1,000,000.

According to another aspect of the present disclosure, there is provided a crosslinked block copolymer, comprising:
a first block copolymer and a second block copolymer having the same structure as the first block copolymer and crosslinked with the first block copolymer,
wherein the first block copolymer is a block copolymer, comprising: a first block comprising a first repeating unit having a pyrene group at a terminal; and a second block comprising a second repeating unit having a cationic functional group, wherein the cationic functional group included in the first block copolymer and the cationic functional group included in the second block copolymer are crosslinked to each other by a crosslinking agent.

The crosslinking agent is not limited to a particular type, but may comprise, for example, a dihalogenoalkane compound (for example, diiodobutane).

According to another aspect of the present disclosure, there may be a sulfur-carbon composite comprising:
a porous carbon material;
a coating layer on at least one surface of the porous carbon material, the coating layer comprising the above-described crosslinked block copolymer; and
a sulfur compound present in at least a portion of a surface or inside of pores of the porous carbon material, or a surface of the coating layer.

The porous carbon material comprises a platy carbon material, the specific surface area of the porous carbon material is 1,000 m²/g or more, and the pore volume of the porous carbon material is 4 cm³/g or more.

The porous carbon material features high specific surface area to increase active sites of sulfur participating in oxidation/reduction reaction. Additionally, the porous carbon material features high pore volume to ensure high sulfur loading and sufficient ion diffusion paths.

The sulfur-carbon composite comprises the porous carbon material as a host for loading the sulfur containing compound. Specifically, the sulfur-carbon composite comprises a platy porous carbon material as the porous carbon material. The platy porous carbon material may comprise, for example, graphene, graphene oxide, reduced graphene oxide (rGO) or a mixture thereof.

In an embodiment of the present disclosure, the platy porous carbon material may comprise reduced graphene oxide alone.

The porous carbon material has the specific surface area of 1,000 m²/g or more. Specifically, the upper limit of the Brunauer-Emmett-Teller (BET) specific surface area of the porous carbon material is not limited to a particular range, and may be, for example, 1,000 m²/g or more and 1,500 m²/g or less, 1,300 m²/g or less, 1,200 m²/g or less, 1,100 m²/g or less, 1,050 m²/g or less. The sulfur-carbon composite according to the present disclosure comprise a plurality of micropores on the outer surface and/or inside thereof and has a very high specific surface area.

The BET specific surface area may be measured by the BET method, and indicate a value measured by the known method for measuring the BET specific surface area. For example, the BET specific surface area may be a value calculated from the adsorption amount of nitrogen gas under the liquid nitrogen temperature (77K) using BEL Japan's BELSORP-max.

The porous carbon material has the pore volume of 4 cm³/g or more. Specifically, the upper limit of the pore volume of the porous carbon material is not limited to a particular range, and may be, for example, 4 cm³/g or more and 15 cm³/g or less, 6 cm³/g or more and 10 cm³/g or less, 6 cm³/g or more and 8 cm³/g or less, or 6.5 cm³/g or more and 7.5 cm³/g or less. The pore volume may be, for example, a measured value calculated through N₂ isotherm analysis obtained based on adsorption of liquid nitrogen.

As described above, the porous carbon material in the sulfur-carbon composite according to an aspect of the present disclosure comprises the plurality of micropores to load the sulfur containing compound.

In an embodiment of the present disclosure, the porous carbon material comprises the plurality of micropores on the outer surface and inside thereof, and in this instance, the micropores comprise meso-pores having the diameter of 1 nm or more and less than 50 nm and macro-pores having the diameter of 50 nm or more and 200 nm or less. In an embodiment of the present disclosure, the porous carbon material preferably has a uniform distribution of the meso-pores and the macro-pores.

The diameter of the micropores may be measured by a method for measuring the pore diameter of porous materials known in the technical field, and the measuring method is not limited to a particular type. For example, the average diameter of the micropores may be measured by scanning electron microscopy (SEM), field emission electron microscopy or a laser diffraction method. The measurement using the laser diffraction method may use, for example, a commercially available laser diffraction particle size measuring instrument (for example, Microtrac MT 3000).

In another embodiment of the present disclosure, the average pore diameter (D50) of the porous carbon material may be, for example, 20 nm to 25 nm, but is not limited thereto. The average diameter (D50) refers to a particle diameter at 50% in cumulative particle size distribution.

In the present disclosure, the sulfur compound is included in at least a portion of the inside of the pores and the outer surface of the porous carbon material having the above-described feature.

The sulfur compound may include, without limitation, any type of sulfur compound that may be used as the positive electrode active material in the lithium-sulfur secondary battery. For example, the sulfur compound may comprise inorganic sulfur (S₈), lithium polysulfide (Li₂Sₙ, 1≤n≤8), carbon sulfur polymer (C₂Sₓ)ₘ, 2.5≤x≤50, 2≤m) or a mixture thereof, but is not limited thereto.

The sulfur compound may be included in the sulfur-carbon composite by physical adsorption onto the porous carbon material, or chemical bonding such as covalent bond, van deer Waals bond, etc. between sulfur and carbon in the porous carbon material.

In an embodiment of the present disclosure, the porous carbon material and the sulfur compound may be, for example, included in the sulfur-carbon composite at a weight ratio of 1:9 to 9:1, and specifically 1:9 to 5:5, 1:9 to 4:6, 1:9 to 3:7 or 1:9 to 1.5:8.5. When the weight ratio of the porous carbon material and the sulfur compound in the sulfur-carbon composite is in the above-described range, since the sulfur compound is included in a large amount, it may be possible to increase the dynamic activity of the sulfur-carbon composite and improve conductivity by the porous carbon material, but the present disclosure is not limited thereto.

In another embodiment of the present disclosure, the amount of the sulfur compound in the sulfur-carbon composite may be, for example, 10 weight% or more, specifically 50 weight% or more, 60 weight% or more, 70 weight% or more, 80 weight% or more, or 85 weight% or more, based on the total weight of the sulfur-carbon composite. Additionally, the amount of the sulfur compound in the sulfur-carbon composite may be 50 weight% to 90 weight%, specifically 60 weight% to 90 weight%, 70 weight% to 90 weight% or 85 weight% to 90 weight% within the above-described range based on the total weight of the sulfur-carbon composite. When the amount of the sulfur compound in the sulfur-carbon composite is in the above-described range, since the sulfur compound is included in a large amount, it may be possible to increase the dynamic activity of the sulfur-carbon composite and improve conductivity by the porous carbon material, but the present disclosure is not limited thereto.

In an embodiment of the present disclosure, the average particle size (D50) of the sulfur-carbon composite may be, for example, 0.5 µm to 200 µm, 1 µm to 150 µm, or 10 µm to 150 µm. The particle size of the sulfur-carbon composite may be measured by SEM, field emission electron microscopy or a laser diffraction method. The measurement using the laser diffraction method may use, for example, a commercially available laser diffraction particle size measuring instrument (for example, Microtrac MT 3000). The average particle size (D50) refers to a particle size at 50% in cumulative particle size distribution.

In an embodiment of the present disclosure, the sulfur-carbon composite may have a Raman peak intensity ratio (I_{G}/I_{D} ratio) of 1 or less. For example, when the ratio of I_{G}/I_{D} is larger than 1, due to high surface crystallinity of the sulfur-carbon composite, efficiency in the combination with the sulfur containing compound or conversion reaction of lithium polysulfide may be low, but is not limited thereto.

The Raman peak intensity ratio may be measured through the I_{G} and I_{D} values obtained from the spectrum of the carbon composite obtained via Raman spectroscopy. In the obtained spectrum, I_{G} denotes the peak (G-peak, 1573/cm) of a crystalline portion, and I_{D} denotes the peak (D-peak, 1309/cm) of an amorphous portion. Accordingly, in this instance, the smaller ratio value of I_{G}/I_{D}, the lower crystallinity.

In an embodiment of the present disclosure, the sulfur-carbon composite may be formed by mixing the porous carbon material with the sulfur compound and performing thermal treatment, but the manufacturing method of the present disclosure is not limited thereto.

Since the sulfur-carbon composite of the present disclosure as described above comprises the platy carbon material having high specific surface area and high pore volume, it may be possible to enhance sulfur loading and provide a plurality of active sites of oxidation/reduction reaction of sulfur, thereby improving battery efficiency and energy density when used in the positive electrode of the lithium-sulfur battery, but the mechanism of the present disclosure is not limited thereto.

In an embodiment of the present disclosure, the coating layer may comprise the above-described crosslinked block copolymer. For example, a weight ratio of the porous carbon material and the crosslinked block copolymer may be 95:5 to 85:15. Additionally, the weight ratio of the porous carbon material coated with the crosslinked block copolymer and the sulfur compound may be 3:7 to 4:6.

According to another aspect of the present disclosure, there is provided a method of manufacturing the sulfur-carbon composite, comprising steps of:
introducing a block copolymer, comprising: a first block comprising a first repeating unit having a pyrene group at a terminal; and a second block comprising a second repeating unit having a cationic functional group into a dispersion of the porous carbon material to coat the block copolymer on at least one surface of the porous carbon material;
crosslinking the block copolymer coated on the porous carbon material to form a crosslinked block copolymer; and
loading sulfur into the porous carbon material coated with the crosslinked block copolymer.

In an embodiment of the present disclosure, the porous carbon material (for example, ketjen black (KB)) and chloride (for example, FeCl₃) may be dispersed in a solvent. For example, the solvent is not limited to a particular type and may include any type of solvent capable of dissolving or dispersing compounds. The solvent may be, for example, a chlorine-based solvent such as chloroform, methylene chloride, 1,2-dichloroethane, 1,1,2-trichloroethane, chlorobenzene, o-dichlorobenzene; an ether-based solvent such as tetrahydrofuran, dioxane; an aromatic hydrocarbon-based solvent such as toluene, xylene, trimethylbenzene, mesitylene; an aliphatic hydrocarbon-based solvent such as cyclohexane, methylcyclohexane, n-pentane, n-hexane, n-heptane, n-octane, n-nonane, n-decane; a ketone-based solvent such as acetone, methylethylketone, cyclohexanone; an ester-based solvent such as ethyl acetate, butyl acetate, ethyl cellosolve acetate; a multivalent alcohol such as ethyleneglycol, ethyleneglycolmonobutylether, ethyleneglycolmonoethylether, ethyleneglycolmonomethylether, dimethoxyethane, propyleneglycol, diethoxy methane, triethyleneglycolmonoethylether, glycerin, 1,2-hexanedio and its derivatives; an alcohol-based solvent such as methanol, ethanol, propanol, isopropanol, cyclohexanol; a sulfoxide-based solvent such as dimethylsulfoxide; an amide-based solvent such as N-methyl-2-pyrrolidone, N,N-dimethylformamide; a benzoate-based solvent such as butylbenzoate, methyl-2-methoxybenzoate; tetralin; 3-phenoxy-toluene.

Subsequently, after the above-described block copolymer is introduced into the dispersion of the porous carbon material, coating may be performed at room temperature for 24 hours. For example, the weight ratio of the porous carbon material and the block copolymer may be 95:5 to 85:15.

Subsequently, the crosslinking agent (for example, a dihalogenoalkane compound such as diiodobutane) was added to the dispersion of the porous carbon material coated with the block copolymer, and thermally treated at approximately 45°C for 24 hours to crosslink the block copolymer in the porous carbon material.

Subsequently, the sulfur compound may be loaded into the porous carbon material coated with the crosslinked block copolymer and thermally treated to make the sulfur-carbon composite. For example, the weight ratio of the porous carbon material coated with the crosslinked block copolymer and the sulfur compound may be 3:7 to 4:6.

Since the crosslinked block copolymer is coated on the porous carbon material, it may be possible to prevent migration of lithium polysulfide leaking from the positive electrode of the lithium-sulfur battery to the negative electrode. Accordingly, it may be possible to prevent sulfur particle accumulation on the lithium metal surface of the negative electrode, thereby maintaining the charge/discharge capacity of the lithium-sulfur battery and improving the battery life.

Hereinafter, examples will be described in detail to help better understanding of the present disclosure. However, the examples according to the present disclosure may be modified in many other forms, and the scope of the present disclosure should not be interpreted as being limited to the following examples. The examples of the present disclosure are provided to fully explain the present disclosure to persons having ordinary skill in the art.

### Example 1

### Preparation of block copolymer

1) Preparation of first monomer: 1-pyrenebutyric acid (PBA) and poly(ethylene glycol) methyl ether methacrylate (PEGMA) were subjected to reaction in a toluene solvent under a p-Toluenesulfonic acid (pTsOH) catalyst at 110°C to synthesize PEGMA-PBA (hereinafter referred to as PP). The synthesized PP was purified through H₂O / MC (methylene chloride) extraction carried out 3 times.

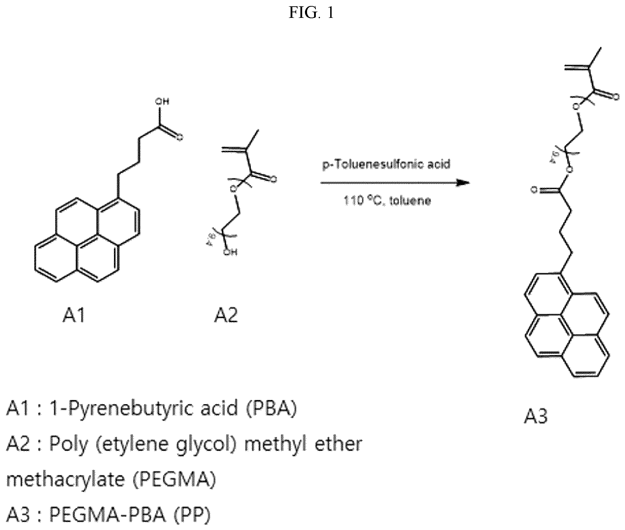

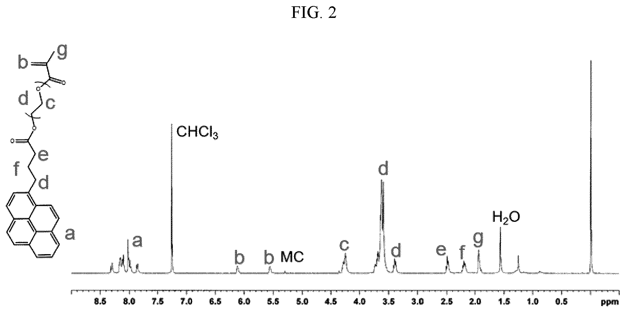

The detailed synthesis mechanism is depicted in FIG. 1, and the structure of the synthesized monomer was seen through ¹H NMR and the results are shown in FIG. 2.

2) Preparation of second monomer: dimethyl amino ethyl acrylate (DMAEMA), a chain transfer agent (CTA, 4-cyano-4-(((tridecylthio)carbonothioyl)thio)pentanoic acid) and AIBN were dissolved in a dioxane solvent and undergone three freeze-pump-thaw cycles to remove oxygen in the solution. The oxygen free solution undergone polymerization at 80°C. The polymerized crude product was purified through precipitation in hexane carried out 3 times, yielding poly(dimethyl-amino) ethyl methacrylate (PDMAEMA).

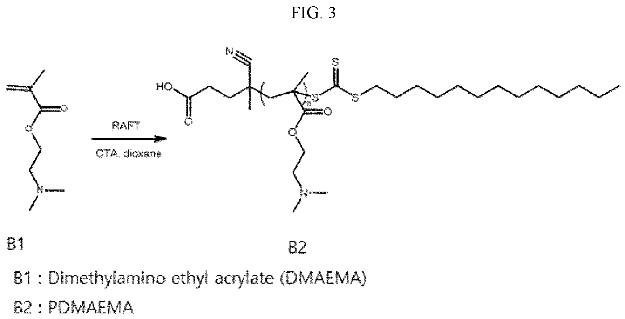

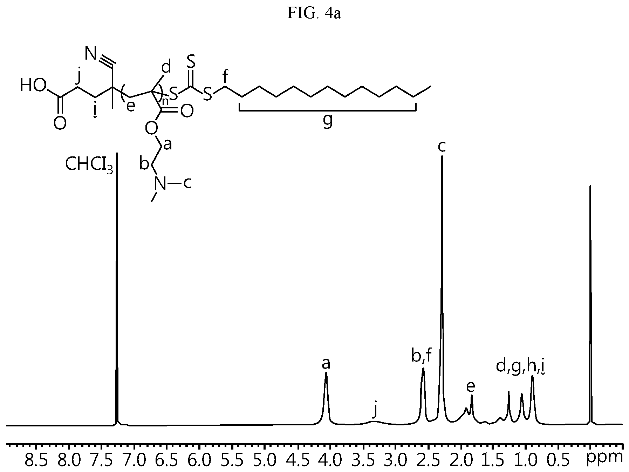

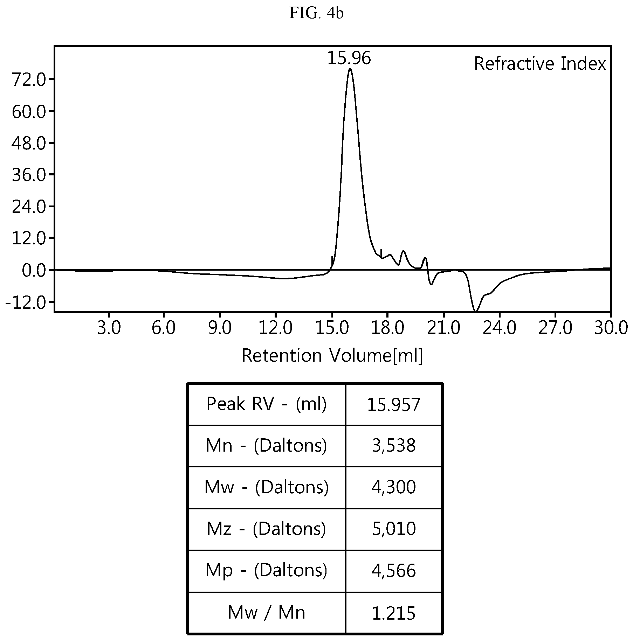

The detailed synthesis mechanism is depicted in FIG. 3, the structure of the synthesized monomer was seen through ¹H NMR, GPC analysis, and the results are shown in FIG. 4a, FIG. 4b.

3) Preparation of block copolymer: the first monomer and the second monomer (first monomer: second monomer =1:1, mole ratio basis) prepared as described above, CTA(4-cyano-4-(((tridecylthio)carbonothioyl)thio)pentanoic acid) and AIBN were dissolved in a dioxane solvent and undergone three freeze-pump-thaw cycles to remove oxygen in the solution. The oxygen fee solution undergone polymerization at 80°C. The polymerized crude product was purified through precipitation in diethyl ether carried out 3 times, yielding PDbPP.

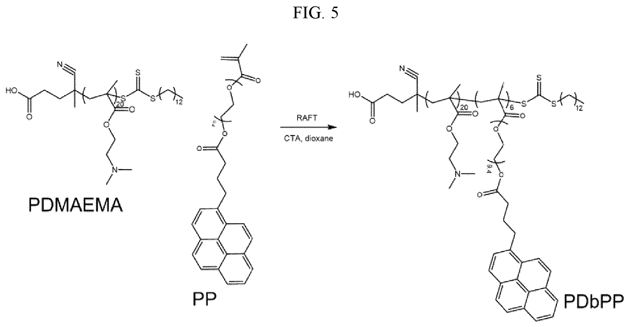

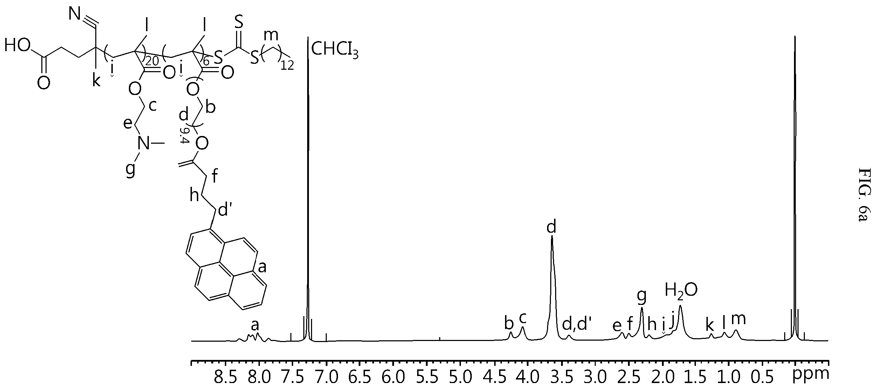

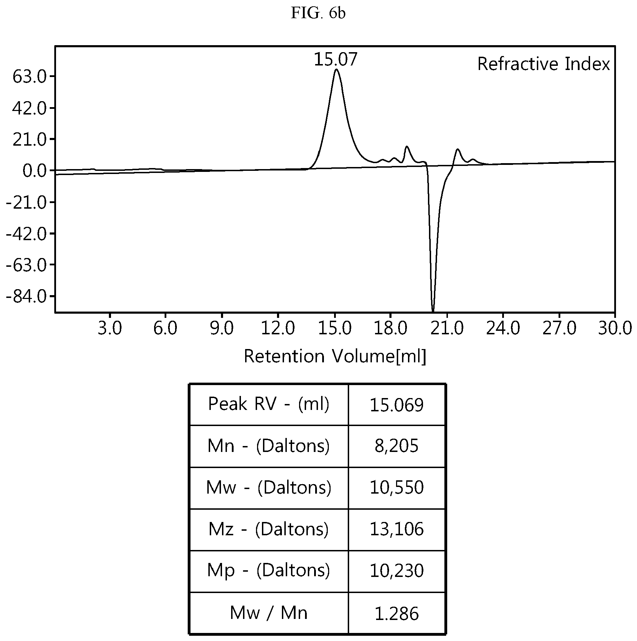

The detailed synthesis mechanism is depicted in FIG. 5, the structure of the synthesized PDbPP was seen through ¹H NMR, GPC analysis, and the results are shown in FIG. 6a, FIG. 6b.

### Preparation of sulfur-carbon composite

1) dispersing ketjen black (KB) and FeCl₃ in a chloroform solvent by sonication for 3 hours.
2) dissolving PDbPP (10 wt% compared to KB) in chloroform, adding to the dispersion of KB dropwise and stirring at room temperature for 24 hours to form a coating.
3) adding diiodobutane to the dispersion of KB coated with PDbPP dropwise and causing reaction at 45°C for 24 hours to crosslink the coated PDbPP, yielding CPDbPP10-KB.
4) pulverizing and mixing CPDbPP10-KB and sulfur (CPDbPP10-KB : S = 7 : 3, w/w) and thermally treating at 155°C for 30 minutes to load sulfur, yielding CPDbPP10-KB-S.

### Positive electrode

A sulfur compound was loaded into ketjen black coated with the crosslinked block copolymer as a positive electrode active material to make a sulfur-carbon composite (CPDbPP10-KB-S).

The sulfur-carbon composite, a PAA binder (poly(acrylic acid)) and a carbon conductive material were mixed at a weight ratio of 85:10:5, and 0.5 wt% of PVA dispersant was added to prepare a positive electrode slurry with the solid concentration of 18 wt%, and the positive electrode slurry was uniformly coated on an aluminum foil to the thickness of 400 um and dried at 50°C to make a positive electrode. The weight ratio of the crosslinked block copolymer to the positive electrode was 8.5 wt%.

### Separator, negative electrode and electrolyte

For a separator, a polyethylene porous film (Celgard separator) was used, and for a negative electrode, lithium metal was used. 1.0 M LiNO₃ was added to a mixed solvent of 1,3-dioxolane (DOL) and 1,2-dimethylether at a volume ratio (v/v) of 50 : 50 to prepare an electrolyte solution for a lithium-sulfur secondary battery.

### Comparative example 1

### Positive electrode

A positive electrode was prepared by the same method as example 1 except that the sulfur-carbon composite in which ketjen black and the sulfur compound were mixed at the weight ratio 3:7 was used as the positive electrode active material.

### Separator, negative electrode and electrolyte

A separator, a negative electrode and an electrolyte were prepared by the same method as example 1.

### Comparative example 2

### Positive electrode

(1) a sulfur compound was loaded into ketjen black as a positive electrode active material, (2) a block copolymer was coated on the sulfur compound loaded ketjen black, (3) the block copolymer was crosslinked to prepare a sulfur-carbon composite comprising a crosslinked block copolymer. The sulfur-carbon composite, a PAA binder, and a carbon conductive material were mixed at a weight ratio of 85:10:5, 0.5 wt% of PVA dispersant was added to prepare a positive electrode slurry with solid concentration of 18 wt%, and the positive electrode slurry was uniformly coated on an aluminum foil to the thickness of 400 µm and dried at 50°C to prepare a positive electrode. A weight ratio of the crosslinked block copolymer to the positive electrode was 3 wt%.

### Separator, negative electrode and electrolyte

A separator, a negative electrode and an electrolyte were prepared by the same method as example 1.

### Comparative example 3

### Positive electrode

A positive electrode was prepared by the same method as comparative example 2, except that the ketjen black coated with the crosslinked block copolymer and the sulfur compound were mixed at the weight ratio of 1:9 (CPDbPP10-KB : S = 1 : 9, w/w).

### Separator, negative electrode and electrolyte

A separator, a negative electrode and an electrolyte were prepared by the same method as example 1.

### Comparative example 4

### Positive electrode

A positive electrode was prepared by the same method as comparative example 2, except that the weight ratio of the crosslinked block copolymer to the positive electrode was 1 wt%.

### Separator, negative electrode and electrolyte

A separator, a negative electrode and an electrolyte were prepared by the same method as example 1.

### Comparative example 5

### Positive electrode

A positive electrode was prepared by the same method as comparative example 2, except that the weight ratio of the crosslinked block copolymer to the positive electrode was 5 wt%.

### Separator, negative electrode and electrolyte

A separator, a negative electrode and an electrolyte were prepared by the same method as example 1.

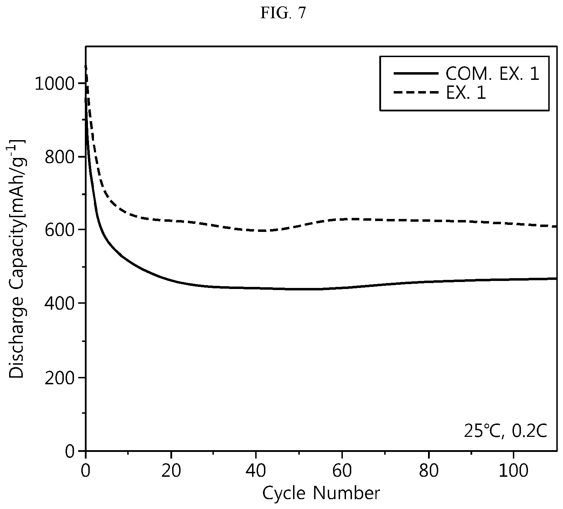

FIG. 7 is a graph showing discharge capacity evaluated by charging/discharging at 25°C in the following conditions.
Tester: WBSC3000 battery cycler (WonAtech)
Current density: 0.2 C-rate

Referring to FIG. 7, the lithium-sulfur battery according to example 1 had higher discharge capacity than the lithium-sulfur battery according to comparative example 1 for 1 cycle to 100 cycles when measured.

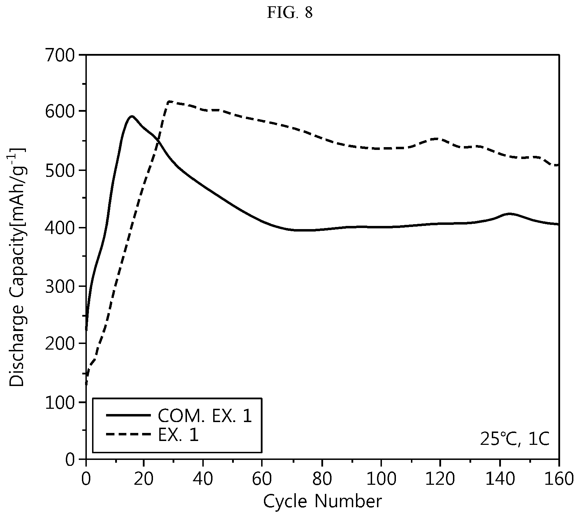

FIG. 8 is a graph showing discharge capacity evaluated by charging/discharging at 25°C in the following conditions.
Tester: WBSC3000 battery cycler (WonAtech)
Current density: 1 C-rate

Referring to FIG. 8, the lithium-sulfur battery according to example 1 had higher discharge capacity than the lithium-sulfur battery according to comparative example 1 for 40 cycles to 160 cycles when measured.

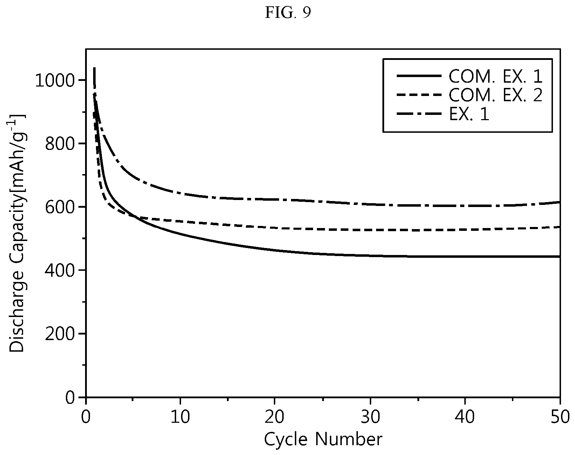

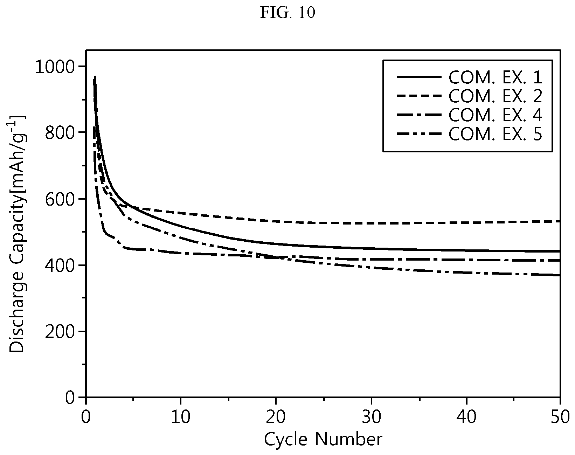

FIGS. 9 and 10 are graphs showing discharge capacity evaluated by charging/discharging at 25°C in the following conditions.
Tester: WBSC3000 battery cycler (WonAtech)
Current density: 0.2 C-rate

Referring to FIGS. 9 and 10, as can be seen from FIG. 9, the lithium-sulfur battery according to example 1 had higher discharge capacity than the lithium-sulfur batteries according to comparative examples 1 and 2 for 1 cycle to 50 cycles when measured.

In other words, the measurements revealed that compared to not forming the coating layer or forming the coating layer after sulfur loading, forming the coating layer on the porous carbon material and then loading the sulfur compound contributed to improved coating of the coating layer, thereby achieving high discharge capacity.

Meanwhile, referring to FIG. 10, it was confirmed that comparative example 2 had higher discharge capacity than comparative examples 1, 4 and 5, but as can be seen from FIG. 9, comparative example 2 was poorer than example 1 in which the coating layer was first formed and then the sulfur compound was loaded.

## Claims

1. A block copolymer, comprising:
a first block comprising a first repeating unit having a pyrene group at a terminal; and
a second block comprising a second repeating unit having a cationic functional group,
wherein the first repeating unit is represented by the following Formula 3, and
wherein the second repeating unit is represented by the following Formula 4: 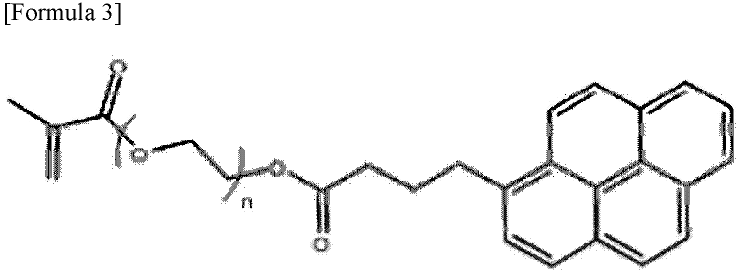
wherein in the Formula 3, n is 1 to 1,000,000, 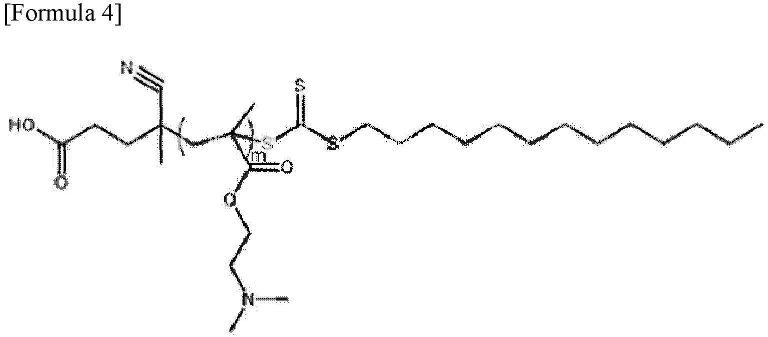
wherein in the Formula 4, m is 1 to 1,000,000.

2. The block copolymer according to claim 1, wherein a mole ratio of the first block and the second block is 1:99 to 99: 1.

3. The block copolymer according to claim 1, wherein the first repeating unit is a result of reaction between a carboxylic acid compound having the pyrene group at the terminal and an alcohol compound having a (meth)acrylate group.

4. A crosslinked block copolymer, comprising:
a first block copolymer and a second block copolymer having a same structure as the first block copolymer and crosslinked with the first block copolymer,
wherein the first block copolymer is a block copolymer, comprising:
a first block comprising a first repeating unit having a pyrene group at a terminal; and
a second block comprising a second repeating unit having a cationic functional group,
wherein the cationic functional group included in the first block copolymer and the cationic functional group included in the second block copolymer are crosslinked to each other by a crosslinking agent.

5. A sulfur-carbon composite, comprising:
a porous carbon material;
a coating layer on at least one surface of the porous carbon material, the coating layer comprising the crosslinked block copolymer according to claim 4; and
a sulfur compound present in at least a portion of a surface of the porous carbon material or inside of pores of the porous carbon material, or a surface of the coating layer.

6. The sulfur-carbon composite according to claim 5, wherein a weight ratio of the porous carbon material and the crosslinked block copolymer is 95:5 to 85:15.

7. The sulfur-carbon composite according to claim 5, wherein a weight ratio of the porous carbon material coated with the crosslinked block copolymer and the sulfur compound is 3:7 to 4:6.

8. A lithium-sulfur battery, comprising:
a positive electrode, a negative electrode, and a separator interposed between the positive electrode and the negative electrode,
wherein the positive electrode comprises the sulfur-carbon composite according to claim 5.

9. A method of manufacturing a sulfur-carbon composite, comprising steps of:
introducing a block copolymer, comprising: a first block comprising a first repeating unit having a pyrene group at a terminal; and a second block comprising a second repeating unit having a cationic functional group into a dispersion of porous carbon material to coat the block copolymer on at least one surface of the porous carbon material;
crosslinking the block copolymer coated on the porous carbon material to form a crosslinked block copolymer; and
loading a sulfur compound into the porous carbon material coated with the crosslinked block copolymer.

10. The method of manufacturing the sulfur-carbon composite according to claim 9, wherein the crosslinked block copolymer is formed by adding a crosslinking agent to the porous carbon material coated with the block copolymer, and performing thermal treatment.

11. The method of manufacturing the sulfur-carbon composite according to claim 10, wherein the crosslinking agent comprises a dihalogenoalkane compound.

## Patentansprüche

1. Blockcopolymer, umfassend:
einen ersten Block, umfassend eine erste Wiederholungseinheit mit einer Pyrengruppe an einem Ende; und
einen zweiten Block, umfassend eine zweite Wiederholungseinheit mit einer kationischen funktionellen Gruppe,
wobei die erste Wiederholungseinheit durch die folgende Formel 3 dargestellt ist, und
wobei die zweite Wiederholungseinheit durch die folgende Formel 4 dargestellt ist: 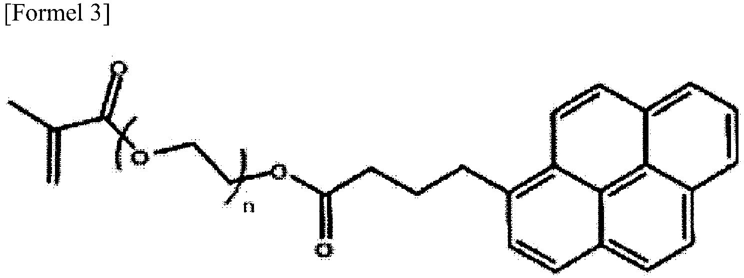
wobei in der Formel 3 n 1 bis 1.000.000 ist, 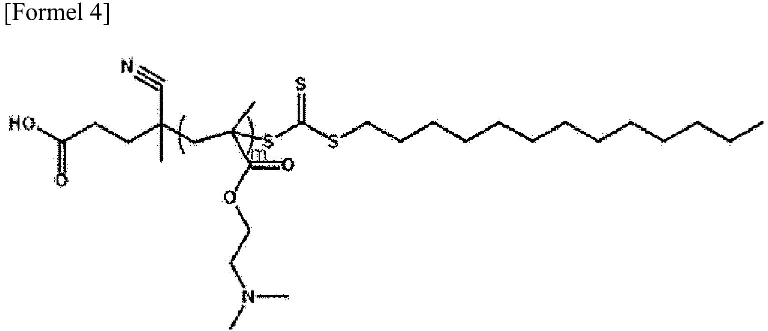
wobei in der Formel 4 m 1 bis 1.000.000 ist.

2. Blockcopolymer nach Anspruch 1, wobei ein Molverhältnis des ersten Blocks und des zweiten Blocks 1:99 bis 99:1 ist.

3. Blockcopolymer nach Anspruch 1, wobei die erste Wiederholungseinheit ein Ergebnis einer Reaktion zwischen einer Carbonsäureverbindung mit der Pyrengruppe an dem Ende und einer Alkoholverbindung mit einer (Meth)acrylatgruppe ist.

4. Vernetztes Blockcopolymer, umfassend:
ein erstes Blockcopolymer und ein zweites Blockcopolymer mit einer gleichen Struktur wie das erste Blockcopolymer und vernetzt mit dem ersten Blockcopolymer,
wobei das erste Blockcopolymer ein Blockcopolymer ist, umfassend:
einen ersten Block, umfassend eine erste Wiederholungseinheit mit einer Pyrengruppe an einem Ende; und
einen zweiten Block, umfassend eine zweite Wiederholungseinheit mit einer kationischen funktionellen Gruppe,
wobei die kationische funktionelle Gruppe, die in dem ersten Blockcopolymer enthalten ist, und die kationische funktionelle Gruppe, die in dem zweiten Blockcopolymer enthalten ist, durch ein Vernetzungsmittel miteinander vernetzt sind.

5. Schwefel-Kohlenstoff-Verbundstoff, umfassend:
ein poröses Kohlenstoffmaterial;
eine Beschichtungsschicht auf mindestens einer Oberfläche des porösen Kohlenstoffmaterials, wobei die Beschichtungsschicht das vernetzte Blockcopolymer nach Anspruch 4 umfasst; und
eine Schwefelverbindung, die in mindestens einem Abschnitt einer Oberfläche des porösen Kohlenstoffmaterials oder innerhalb von Poren des porösen Kohlenstoffmaterials oder einer Oberfläche der Beschichtungsschicht vorhanden ist.

6. Schwefel-Kohlenstoff-Verbundstoff nach Anspruch 5, wobei ein Gewichtsverhältnis des porösen Kohlenstoffmaterials und des vernetzten Blockcopolymers 95:5 bis 85:15 ist.

7. Schwefel-Kohlenstoff-Verbundstoff nach Anspruch 5, wobei ein Gewichtsverhältnis des porösen Kohlenstoffmaterials, das mit dem vernetzten Blockcopolymer beschichtet ist, und der Schwefelverbindung 3:7 bis 4:6 ist.

8. Lithium-Schwefel-Batterie, umfassend:
eine positive Elektrode, eine negative Elektrode und einen Separator, der zwischen der positiven Elektrode und der negativen Elektrode angeordnet ist,
wobei die positive Elektrode den Schwefel-Kohlenstoff-Verbundstoff nach Anspruch 5 umfasst.

9. Verfahren zur Herstellung eines Schwefel-Kohlenstoff-Verbundstoffs, umfassend die Schritte:
Einführen eines Blockcopolymers, umfassend: einen ersten Block, umfassend eine erste Wiederholungseinheit mit einer Pyrengruppe an einem Ende; und einen zweiten Block, umfassend eine zweite Wiederholungseinheit mit einer kationischen funktionellen Gruppe, in eine Dispersion von porösem Kohlenstoffmaterial, um das Blockcopolymer auf mindestens einer Oberfläche des porösen Kohlenstoffmaterials zu beschichten;
Vernetzen des Blockcopolymers, das auf dem porösen Kohlenstoffmaterial beschichtet ist, um ein vernetztes Blockcopolymer zu bilden; und
Laden einer Schwefelverbindung in das poröse Kohlenstoffmaterial, das mit dem vernetzten Blockcopolymer beschichtet ist.

10. Verfahren zur Herstellung des Schwefel-Kohlenstoff-Verbundstoffs nach Anspruch 9, wobei das vernetzte Blockcopolymer durch Zugeben eines Vernetzungsmittels zu dem porösen Kohlenstoffmaterial, das mit dem Blockcopolymer beschichtet ist, und Durchführen einer Wärmebehandlung gebildet wird.

11. Verfahren zur Herstellung des Schwefel-Kohlenstoff-Verbundstoffs nach Anspruch 10, wobei das Vernetzungsmittel eine Dihalogenalkanverbindung umfasst.

## Revendications

1. Copolymère à blocs, comprenant :
un premier bloc comprenant une première unité de répétition ayant un groupe pyrène à une extrémité ; et
un deuxième bloc comprenant une deuxième unité de répétition ayant un groupe fonctionnel cationique,
dans lequel la première unité de répétition est représentée par la Formule 3 ci-après, et
dans lequel la deuxième unité de répétition est représentée par la Formule 4 ci-après : 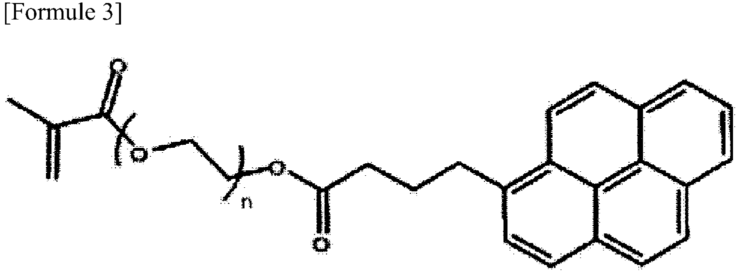
dans lequel dans la Formule 3, n est 1 à 1 000 000, 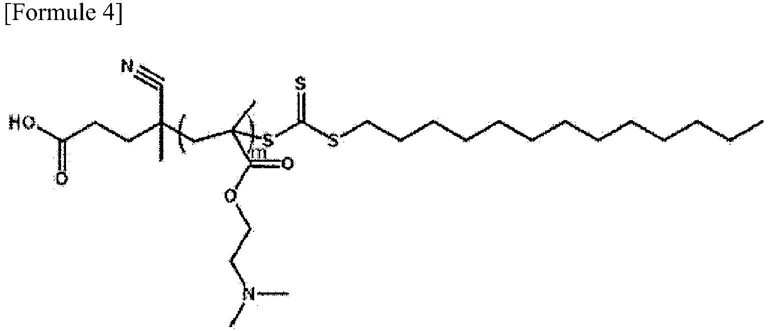
dans lequel dans la Formule 4, m est 1 à 1 000 000.

2. Polymère à blocs selon la revendication 1, dans lequel un rapport molaire du premier bloc et du deuxième bloc est 1:99 à 99:1.

3. Polymère à blocs selon la revendication 1, dans lequel la première unité de répétition est un résultat de réaction entre un composé d'acide carboxylique ayant le groupe pyrène à l'extrémité et un composé d'alcool ayant un groupe (méth)acrylate.

4. Polymère à blocs réticulé, comprenant :
un premier copolymère à blocs et un deuxième copolymère à blocs ayant une même structure que le premier copolymère à blocs et réticulé avec le premier copolymère à blocs,
dans lequel le premier copolymère à blocs est un copolymère à blocs, comprenant :
un premier bloc comprenant une première unité de répétition ayant un groupe pyrène à une extrémité ; et
un deuxième bloc comprenant une deuxième unité de répétition ayant un groupe fonctionnel cationique,
dans lequel le groupe fonctionnel cationique inclus dans le premier copolymère à blocs et le groupe fonctionnel cationique inclus dans le deuxième copolymère à blocs sont réticulés l'un avec l'autre par un agent de réticulation.

5. Composite de carbone-soufre, comprenant :
un matériau de carbone poreux ;
une couche de revêtement sur au moins une surface du matériau de carbone poreux, la couche de revêtement comprenant le polymère à blocs réticulé selon la revendication 4 ; et
un composé de soufre présent dans au moins une partie d'une surface du matériau de carbone poreux ou a l'intérieur de pores du matériau de carbone poreux, ou une surface de la couche de revêtement.

6. Composite de carbone-soufre selon la revendication 5, dans lequel un rapport en poids du matériau de carbone poreux et du polymère à blocs réticulé est 95:5 à 85:15.

7. Composite de carbone-soufre selon la revendication 5, dans lequel un rapport en poids du matériau de carbone poreux revêtu du polymère à blocs réticulé et du composé de soufre est 3:7 à 4:6.

8. Batterie au lithium-soufre, comprenant :
une électrode positive, une électrode négative, et un séparateur interposé entre l'électrode positive et l'électrode négative,
dans lequel l'électrode positive comprend le composite de carbone-soufre selon la revendication 5.

9. Procédé de fabrication d'un composite de carbone-soufre, comprenant les étapes consistant à :
introduire un copolymère à blocs, comprenant : un premier bloc comprenant une première unité de répétition ayant un groupe pyrène à une extrémité ; et un deuxième bloc comprenant une deuxième unité de répétition ayant un groupe fonctionnel cationique dans une dispersion de matériau de carbone poreux pour revêtir le copolymère à blocs sur au moins une surface du matériau de carbone poreux ;
réticuler le copolymère à blocs revêtu sur le matériau de carbone poreux pour former un polymère à blocs réticulé ; et
charger un composé de soufre dans le matériau de carbone poreux revêtu avec le polymère à blocs réticulé.

10. Procédé de fabrication du composite de carbone-soufre selon la revendication 9, dans lequel le polymère à blocs réticulé est formé en ajoutant un agent de réticulation au matériau de carbone poreux revêtu du copolymère à blocs et en effectuant un traitement thermique.

11. Procédé de fabrication du composite de carbone-soufre selon la revendication 10, dans lequel l'agent de réticulation comprend un composé d'alcane dihalogéné.
